# EUROPÄISCHE PATENTSCHRIFT

(11) **EP 2 519 131 B1**
(45) Veröffentlichungstag und Bekanntmachung des Hinweises auf die Patenterteilung: **25.01.2017**
(21) Anmeldenummer: 10768679.2
(22) Anmeldetag: 27.09.2010
(51) Int. Cl.: A47J 45/07

(54) **DECKEL FÜR EINEN SCHNELLKOCHTOPF SOWIE SCHNELLKOCHTOPF MIT EINEM DECKEL**
LID FOR A PRESSURE COOKER, AND PRESSURE COOKER COMPRISING A LID
COUVERCLE POUR AUTOCUISEUR, ET AUTOCUISEUR POURVU D'UN COUVERCLE

(30) Priorität: 05.07.2010 DE 202010012194 U
(43) Veröffentlichungstag der Anmeldung: 07.11.2012
(73) Patentinhaber: Silag Handel AG, 40764 Langenfeld/ Rhld (DE)
(72) Erfinder: SCHULTZ, Horst, 65239 Hochheim (DE); LAPAWA, Siegfried, 42697 Solingen (DE)
(74) Vertreter: Demski, Siegfried
(86) Internationale Anmeldenummer: PCT/EP2010/005888
(87) Internationale Veröffentlichungsnummer: WO 2012/003853

(56) Entgegenhaltungen:
- EP-A2- 1 342 440
- DE-U1-202009 015 975

## Beschreibung

Die Erfindung betrifft einen Deckel für einen Schnellkochtopf, umfassend einen Zargendeckel mit einer Lippendichtung und einem Griff, wobei der Deckel auf einem Schnellkochtopf verriegelbar ist. Insbesondere betrifft die Erfindung einen Deckel für Schnellkochtöpfe mit einem Schüttrand, die auch als herkömmliche Töpfe verwendbar sind.

Bei Schnellkochtöpfen handelt es sich um Gargeräte, die nach dem Prinzip der Siedepunktserhöhung arbeiten. Derartige Schnellkochtöpfe sind mit einem Deckel mit einem Überdruckventil versehen, über welches der ge wünschte Arbeitsdruck des Topfes festgelegt ist. So können Lebensmittel bei Temperaturen von in der Regel etwa 120 °C in wesentlich kürzerer Zeit gegart werden.

Schnellkochtöpfe sind als Druckbehälter ausgebildet und müssen hohen Sicherheitsanforderungen genügen. Herkömmliche Schnellkochtöpfe umfassen in der Regel einen Topf, welcher mit umlaufenden Nuten oder ähnlichem versehen ist, in denen ein darauf abgestimmter Deckel verriegelt werden kann. Schnellkochtöpfe sind aufgrund der am Topf vorhandenen Verriegelungsmittel in der Regel wenig geeignet, um als normaler Kochtopf zum drucklosen Kochen verwendet zu werden.

Die Europäische Patentschrift EP 1416837 B1 schlägt einen Deckel für einen Schnellkochtopf vor, welcher U-förmig gebogene Krallen aufweist, mittels der sich der Deckel am Schüttrand eines "normal" geformten Topfes verriegeln lässt.

Dieser mit einem Schüttrand versehene Topf eignet sich wesentlich besser, um als normaler Kochtopf verwendet zu werden. Nachteilig ist dabei, dass für die normale, drucklose Verwendung der komplette Deckel des Topfes getauscht werden muss.

Zum Reinigen können nach der Lehre der EP 1416837 B1 die Verriegelungskrallen zwar abgenommen werden. Dies ist jedoch relativ aufwändig, da hierzu eine Mutter auf der Unterseite des Deckels gelöst werden muss. Hierfür muss in der Regel ein Werkzeug verwendet werden.

Auch ist der mit Krallen versehene Deckel nur wenig geeignet, um im unverriegelten Zustand als normaler Kochtopfdeckel verwendet zu werden. Es ist daher erforderlich, zum drucklosen Betrieb des Kochtopfes einen zweiten Deckel vorrätig zu halten.

Des Weiteren ist der Aufbau des Deckels relativ aufwändig und kompliziert.

Aus der DE 20 2009 015 975 U1 ist ein Gargefäß bekannt, welches aus einem Deckelmodul mit einem Funktionsdeckel mit Lippendichtung und Topfwand einerseits und einem Topfmodul als Gargefäß andererseits besteht. Topfmodul und Deckelmodul sind hierbei durch einen Bolzen mit einer Mutter miteinander verschraubt, wodurch die oben genannten Nachteile zur EP 1 416 837 B1 fortbestehen.

Aus der EP 1 342 440 B1 ist ein Dampfdruck-Kochgerät mit einem Deckelmodul bekannt, bei dem ebenfalls eine Verschraubung des Griffes und Deckelmoduls vorgesehen ist. Somit werden die vorgenannten Probleme nicht beseitigt.

Der Erfindung liegt dem gegenüber die Aufgabe zugrunde, einen Deckel für einen Schnellkochtopf bereitzustellen, dessen Handhabbarkeit verbessert ist. Insbesondere ist es eine Aufgabe der Erfindung, den Deckel auf einfache Weise zu einem normalen Deckel ohne Verriegelung umzufunktionieren. Weiter soll Aufbau und Reinigung des Deckels vereinfacht werden.

Die Aufgabe der Erfindung wird durch einen Deckel für einen Schnellkochtopf nach Anspruch 1 gelöst. Bevorzugte Ausführungsformen und Weiterbildungen der Erfindung sind den jeweiligen Unteransprüchen zu entnehmen.

Die Erfindung betrifft einen Deckel für einen Schnellkochtopf, insbesondere einen Deckel, welcher auf herkömmlichen Töpfen mit einem Schüttrand verriegelbar ist.

Der Deckel umfasst einen Zargendeckel mit einer Lippendichtung sowie einen Griff. Unter einem Zargendeckel wird ein unterer Deckel mit einem umlaufenden Steg beziehungsweise einer Zarge verstanden, welcher eine Lippendichtung aufweist und welcher in den Topf einsetzbar ist. Weiter umfasst der Deckel einen Griff, welcher üblicherweise als Knopf ausgebildet ist und mittels dessen der Deckel vom Topf abhebbar ist.

Um ein druckdichtes Behältnis zu schaffen, ist der Deckel auf dem Kochtopf verriegelbar.

Gemäß der Erfindung weist der Griff einen Schiebemechanismus auf, um den Griff zusammen mit zumindest einem Teil eines Verriegelungsmechanismus vom Zargendeckel abzuheben.

Ein derartiger Schiebemechanismus umfasst einen Schieber, welcher in einer Position formschlüssig, beispielsweise mit dem Kragen eines Befestigungsbolzens eines Ventilgehäuses verbunden ist. Über eine Verschiebung eines Reglers rutscht dieser in eine Position, in welcher die formschlüssige Verbindung freigegeben wird. Auf diese Weise kann der Griff sehr einfach auf Knopfdruck abgenommen werden.

Der Deckel umfasst somit quasi zwei Module, nämlich ein unteres Modul mit einem Zargendeckel und ein oberes Modul mit einem Griff und einem Verriegelungsmechanismus.

Dadurch, dass am Griff selbst Mittel vorgesehen sind, um diesen zusammen mit dem Verriegelungsmechanismus vom Zargendeckel zu trennen, kann dieser auf sehr einfache Weise entfernt werden, ohne dass beispielsweise am Unterteil des Deckels Schrauben gelöst werden müssen.

Der Zargendeckel weist Mittel auf, an denen der Griff befestigt werden kann. Nach Abnehmen des Griffes mit dem Verriegelungsmechanismus kann der Griff durch einen herkömmlichen Griff ohne Verriegelungsmechanismus ersetzt werden.

So entsteht aus dem Zargendeckel zusammen mit diesem weiteren Griff ein normaler Deckel, der zum herkömmlichen Kochen gut geeignet ist.

Aufgrund dieser einfachen Austauschbarkeit braucht der Benutzer nicht zwei verschiedene Deckel, nämlich einen Deckel zum Schnellkochen und einen Deckel zum drucklosen Kochen, vorrätig zu halten.

Weiter wird die Reinigung des Deckels dadurch erleichtert, dass der Mechanismus zum Abnehmen des Griffes und des Verriegelungsmechanismus auf der Oberseite des Deckels vorhanden ist.

Eine Betätigung von beispielsweise einer Schraube auf der Unterseite des Deckels erschwert in der Regel die Reinigung, da die Unterseite nach dem Kochen durch Lebensmittelreste verschmutzt sein kann.

Bei einer Weiterbildung der Erfindung ist der Griff an einem vorzugsweise mittig an dem Zargendeckel angebrachten Ventil befestigbar.

Bei dieser Ausführungsform der Erfindung kann das Ventilgehäuse, welches beispielsweise stiftförmig ausgebildet ist, verwendet werden, um einen Griff daran zu befestigen. Somit muss der Griff nicht durch einen gesonderten Gewindebolzen oder ähnliches befestigt sein und das am Zargendeckel befestigte Ventil stört nicht bei der Verwendung des Zargendeckels als normaler Deckel zum drucklosen Kochen, sondern ist als Aufnahme für den weiteren Griff ausgebildet.

So ist, wie es bei einer bevorzugten Ausführungsform der Erfindung vorgesehen ist, zumindest ein Ventil im Griff angeordnet.

Dieses Ventil dient bei einer Ausführungsform der Erfindung zur Festlegung des Arbeitsdruckes des Topfes. Dies bedeutet, das im Griff angeordnete Ventil öffnet beim gewünschten Arbeitsdruck und regelt so über die Siedetemperatur des Wassers die Temperatur, die im Inneren des Topfes herrscht.

Bei einer alternativen Ausführungsform der Erfindung kann im Griff aber auch statt des Ventils zur Festlegung des Arbeitsdruckes ein Sicherheitsventil integriert sein, welches als zweites Ventil vorgesehen ist, das bei höherem Druck öffnet falls das andere Ventil versagt und/oder welches bei Druck den Verriegelungsmechanismus des Deckels blockiert, so dass dieser nicht geöffnet werden kann.

Bei einer Weiterbildung der Erfindung ist das Ventil einstellbar. Dies ist beispielsweise auf einfache Weise dadurch möglich, dass mittels einer Stellschraube die Vorspannung einer Ventilfeder einstellbar ist. Hierdurch können bei einem derartig einstellbaren Ventil vom Benutzer verschiedene Druckstufen zum Kochen bei unterschiedlicher Temperatur eingestellt werden.

Bei einer bevorzugten Ausführungsform der Erfindung ist der Verriegelungsmechanismus mittels des Griffes betätigbar. Insbesondere ist vorgesehen, als Verriegelungsmechanismus Krallen mit U-förmigen Enden zu verwenden, welche in den Schüttrand eines Topfes eingreifen und bei Drehung des Griffes eine zumindest inwärts, also in Richtung der Mittelachse des Topfes gerichtete Bewegung, ausführen.

Vorzugsweise verläuft die Bewegungsrichtung der Krallen gleichzeitig nach oben in Richtung des Knopfes. Im verriegelten Zustand wird hierdurch erreicht, dass bei Druckaufbau eine inwärts gerichtete Kraft auf die Krallen ausgeübt wird.

Eine Entriegelung ist daher nur mit hohem Kraftaufwand oder, insbesondere bei höherem Druck, auch gar nicht möglich. Dies kann auch in Kombination mit einem Sicherheitsventil, welches den Verriegelungsmechanismus blockiert, die Sicherheit des Topfes weiter verbessern.

Der Topf umfasst vorzugsweise zwei Ventile, nämlich ein Ventil zur Festlegung des Arbeitsdrucks sowie ein Sicherheitsventil, welches beispielsweise den Verriegelungsmechanismus bei Druck blockiert, so dass der Topf nicht geöffnet werden kann. Das Sicherheitsventil kann auch so ausgebildet sein, dass es bei höherem Druck als das andere Ventil auslöst, falls dieses versagt.

Bei einer bevorzugten Ausführungsform der Erfindung wird über zumindest eines der Ventile der Verriegelungsmechanismus des Deckels im nicht drucklosem Zustand verriegelt. Hierzu ist beispielsweise vorgesehen, dass der Stift eines Sicherheitsventils in eine entsprechende Aussparung des Griffes eingreift und so bei unter Druck stehendem Topf eine Drehung des Griffes, mit welchem der Verriegelungsmechanismus des Deckels betätigt wird, blockiert.

Weiter kann zumindest eines der Ventile einen Stift betätigen, welcher auf dem abnehmbaren Teil des Deckels, insbesondere am Griff, angebracht ist.

Dieser Stift kann beispielsweise dazu verwendet werden, um dem Benutzer den vorhandenen Druck optisch zu signalisieren.

Bei einer Ausführungsform der Erfindung umfasst der Deckel eine Mittelplatte, welche zwischen dem Griff und dem Zargendeckel angeordnet ist und an welcher Krallen zur Verriegelung des Deckels angebracht sind.

Über die Mittelplatte wird das abnehmbare Modul mit dem Verriegelungsmechanismus und dem Griff gebildet. Insbesondere dient die Mittelplatte der Anbringung des Verriegelungsmechanismus. Der Griff und/oder die Mittelplatte ist vorzugsweise bei aufgesetztem Griff axial nicht drehbar mit dem Zargendeckel verbunden, wohingegen der Griff drehbar an der Mittelplatte befestigt ist, so dass über den Griff Krallen zur Verriegelung des Deckels betätigt werden können.

Bei einer Weiterbildung der Erfindung ist die Mittelplatte zusammen mit dem Griff abnehmbar und zwischen der Mittelplatte und dem Zargendeckel ist ein Kanal angeordnet, durch welchen Dampf, welcher über zumindest ein Ventil ausströmt, entweichen kann.

Im abgenommenen Zustand kann dieser Kanal besonders leicht gereinigt werden.

Weiter ist von besonderem Vorteil, dass der Dampf nur durch den Kanal zwischen Mittelplatte und Zargendeckel entweicht, nicht aber entlang der mechanischen Elemente des Verriegelungsmechanismus ausgeleitet wird. So können Essensreste, welche mit dem Dampf mittransportiert werden können, lediglich mit dem Kanal in Kontakt kommen, welcher einfach reinigbar ohne verdeckte Flächen ausgebildet sein kann.

Vorzugsweise besteht der Deckel daher aus zwei voneinander trennbaren Modulen, wobei das eine Modul einen Griff und den Verrieglungsmechanismus zum Verriegeln des Deckels an dem Schüttrand eines Topfes und das andere Modul einen Zargendeckel zum Abdecken des Topfes umfasst.

Gemäß der Erfindung ist ein Verriegelungsmechanismus auf einer Mittelplatte angeordnet, welche ihrerseits zwischen Zargendeckel und Griff angeordnet ist.

Die Mittelplatte ist mit dem Verriegelungsmechanismus vom Zargendeckel abnehmbar, wobei zwischen Mittelplatte und Zargendeckel ein Kanal ausgebildet ist, durch welchen Dampf, der aus zumindest einem Ventil ausströmt, ins Freie treten kann.

Durch die Verwendung eines zwischen einer Mittelplatte und einem Zargendeckel angeordneten Kanals kann weitgehend verhindert werden, dass Dampf mit der Mechanik des Verriegelungsmechanismus in Kontakt kommt und dass der Verriegelungsmechanismus, welcher relativ schwer zu reinigen ist, durch im Dampf vorhandene Partikel verunreinigt wird.

Die Erfindung betrifft des Weiteren einen Deckel für einen Schnellkochtopf, insbesondere mit einem oder mehreren zuvor beschriebenen Merkmalen, welcher einen Zargendeckel mit einer Lippendichtung und zumindest ein Ventil zur Festlegung des Arbeitsdrucks umfasst.

Weiter umfasst der Deckel ein Sicherheitsventil und einen Griff. Zumindest eines der Ventile ist im Griff angeordnet und kann, insbesondere wenn es am Zargendeckel angebracht ist, als Aufnahme dienen, an welcher der Griff des Deckels befestigt ist.

Die Erfindung soll im Folgenden Bezug nehmend auf die Zeichnungen Fig. 1 bis Fig. 10, schematisch dargestellt, näher erläutert werden.

Es zeigt
- Fig. 1: eine schematische Schnittansicht eines Schnellkochtopfs mit aufgesetztem Deckel,
- Fig. 2: eine Detailansicht der in Fig. 1 dargestellten Schnittansicht,
- Fig. 3: eine perspektivische Ansicht eines Deckels für einen Schnellkochtopf,
- Fig. 4: eine perspektivische Ansicht eines oberen Moduls mit dem Verriegelungsmechanismus,
- Fig. 5: das untere Modul eines Deckels in einer perspektivischen Ansicht,
- Fig. 6: ein Detail des Griffes,
- Fig. 7: ein Detail des Griffes,
- Fig. 8: eine perspektivische Ansicht eines Deckels, welcher entlang einer auf der Mittelachse des Deckels liegenden Ebene geschnitten ist,
- Fig. 9: eine weitere Schnittansicht eines Deckels,
- Fig. 10: ein Detail einer Mittelplatte,
- Fig. 11: den Verriegelungsmechanismus eines Deckels und

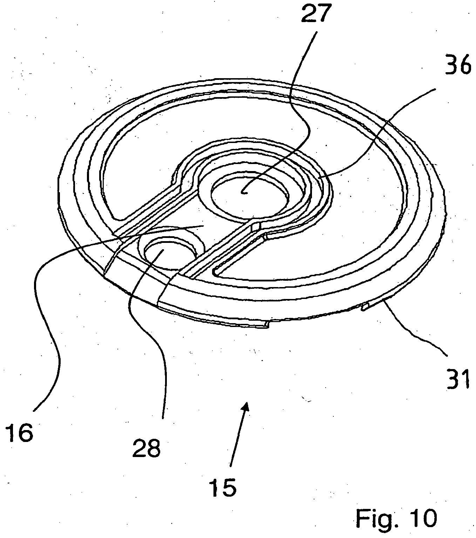

- Fig. 10: den Verriegelungsmechanismus eines Deckels.

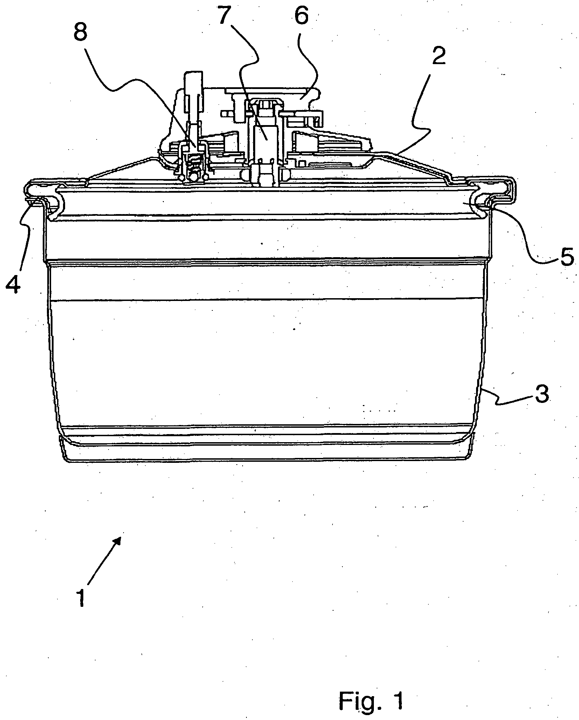

Fig. 1 zeigt eine schematische Schnittansicht eines Schnellkochtopfs 1 gemäß eines Ausführungsbeispiels der Erfindung.

Der Schnellkochtopf 1 umfasst einen Topf 3 mit einem Schüttrand 4 sowie einen Deckel 2.

Der Schnellkochtopf 1 ist als Druckbehälter ausgebildet. Über den Griff 6 kann ein Verriegelungsmechanismus betätigt werden, mit welchem der Deckel 2 auf dem Schüttrand 4 des Topfes verriegelt wird. Über die Lippendichtung 5 wird der Topf abgedichtet.

Der Deckel 2 umfasst ein Ventil 7 zur Festlegung des Arbeitsdruckes sowie ein Sicherheitsventil 8.

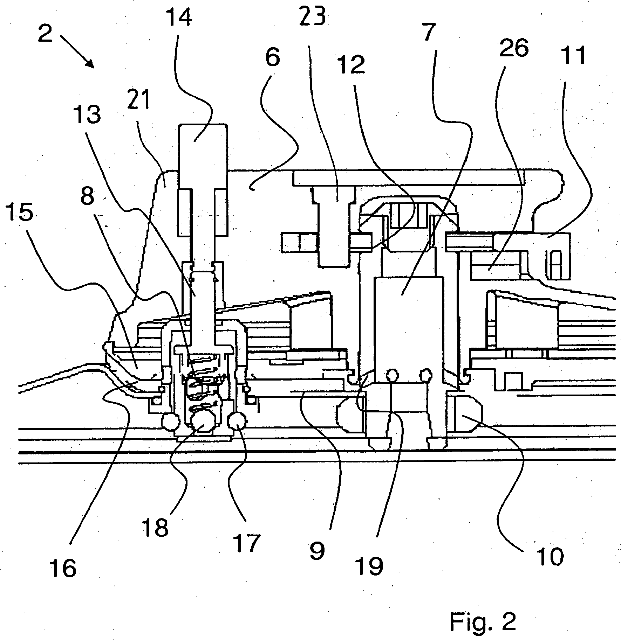

Fig. 2 zeigt eine Detailansicht des in Fig. 1 dargestellten Deckels, in welchem die Einzelheiten, insbesondere die Ventilanordnung besser zu erkennen sind.

Der Deckel 2 umfasst einen Zargendeckel 9, welcher auf den Topf aufgesetzt wird und welcher mit einer Lippendichtung (5 in Fig. 1) versehen ist.

Am Zargendeckel 9 angebracht ist ein erstes Ventil 7, über welches der Arbeitsdruck des Schnellkochtopfes 1 festgelegt wird. Das Ventil 7, dargestellt ist hier nur das Ventilgehäuse, ist mit einer Mutter 10 mittig am Zargendeckel 9 befestigt.

Weiter umfasst der Deckel 2 einen Griff 6, welcher drehbar am Gehäuse des Ventils 7 angebracht wird. Hierzu umfasst das Gehäuse des Ventils 7 eine umlaufende Nut 12, in welcher der Griff 6 mittels des Schiebers 11 befestigt werden kann. Hierzu ist vorzugsweise ein Kanal 26 für eine Feder (nicht dargestellt) vorgesehen, mit welcher der Schieber 11 nach außen gedrückt wird.

Durch Drücken auf den Schieber 11 kann der Schieber 11 gegen die Federkraft in eine Position verschoben werden, in welcher die formschlüssige Verbindung in der Nut 12 des Gehäuses des Ventils 7 freigegeben wird.

Der Griff 6 ist des Weiteren drehbar mit einer Mittelplatte 15 verbunden.

Über eine Drehung des Griffes 6 kann der Deckel über Krallen 20 verriegelt werden, wie im Folgenden, Bezug nehmend auf weitere Zeichnungen, noch ausführlicher dargestellt werden wird.

Weiter umfasst der Zargendeckel 9 ein deaxial angeordnetes weiteres Ventil, welches in diesem Ausführungsbeispiel als Sicherheitsventil 8 ausgebildet ist. Das Sicherheitsventil 8 ist ebenfalls am Zargendeckel 9 befestigt. Das Sicherheitsventil 8 ist als Kugelventil mit einer Kugel 18 ausgebildet, welche mittels einer Feder gegen eine Dichtfläche gedrückt wird. Ein Dichtungsring 17 dient der Abdichtung des Ventilgehäuses.

Es versteht sich, dass auch bezüglich des Ventils 7 weitere Dichtungsmittel vorhanden sein können.

Das Oberteil des Sicherheitsventils 8 umfasst ein Oberteil 13, mittels dessen ein im Griff 6 angeordneter Stift 14 betätigbar ist. Über den Stift 14 ist erkennbar, dass der Topf unter Druck steht.

Über das Oberteil 13, welches bei Druck in eine Aussparung des Griffes 6 eingreift, wird verhindert, dass der Griff 6 bei unter Druck stehendem Topf gedreht wird und so der Verriegelungsmechanismus betätigt werden kann.

Durch Herunterdrücken des Stiftes 14 kann des Weiteren der Druck aus dem Schnellkochtopf 1 abgelassen werden, um diesen anschließend zu öffnen.

Sowohl das Ventilgehäuse des Ventils 7 als auch das Ventilgehäuse des Sicherheitsventils 8 besitzen seitliche Kanäle 19, über welche Dampf in einen zwischen Zärgendeckel 9 und Mittelplatte 15 gebildeten Kanal 16 entweichen kann.

Da die Mittelplatte 15 zusammen mit dem Griff 6 abnehmbar ist, ist der Kanal 16 besonders einfach zu reinigen. Insbesondere tritt durch diese Anordnung der Dampf nicht an den Krallen 20 des Verriegelungsmechanismus aus.

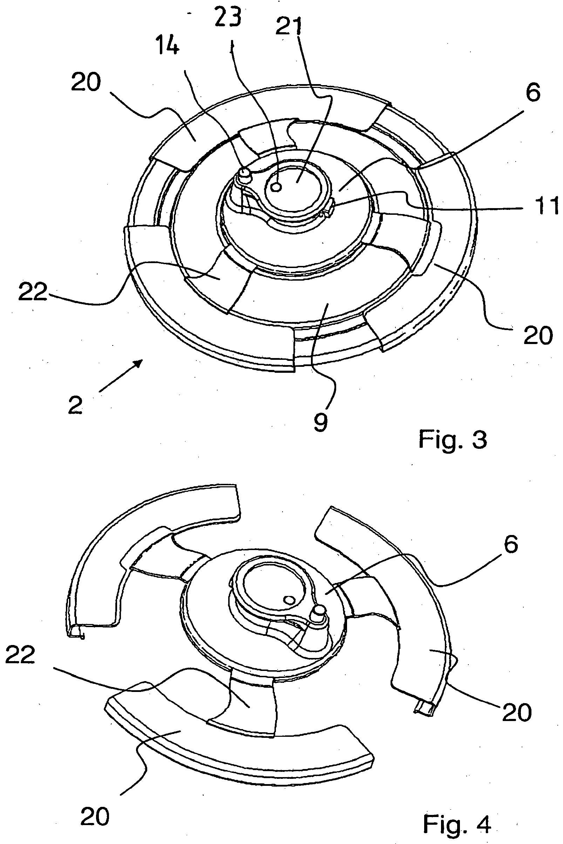

Fig. 3 zeigt eine perspektivische Ansicht eines Deckels. Zu sehen ist der Zargendeckel 9, welcher von drei U-förmig ausgebildeten Krallen 20 umschlossen wird. Die Krallen 20 sind über Verbindungsstege 22 mit dem Griff 6 gekoppelt.

Der Griff 6 umfasst einen Knopf 21, mit welchem der gesamte Deckel abgenommen werden kann. Zur Betätigung des Verriegelungsmechanismus kann der Griff 6 am Knopf 21 gedreht werden. Die Krallen 20 bewegen sich beim Verriegeln des Topfes inwärts und greifen dabei unter den Schüttrand 4 des Topfes.

Zum Abnehmen des den Griff 6 und den Verriegelungsmechanismus umfassenden Moduls kann der Schieber 11 gedrückt werden und ein oberes Modul, welches den Verriegelungsmechanismus umfasst, abgenommen werden.

Die Bestandteile des oberen Moduls sind in der perspektivischen Ansicht gemäß Fig. 4 dargestellt.

Zu sehen sind die drei Krallen 20, welche über Verbindungsstege 22 mit dem Griff 6 gekoppelt sind.

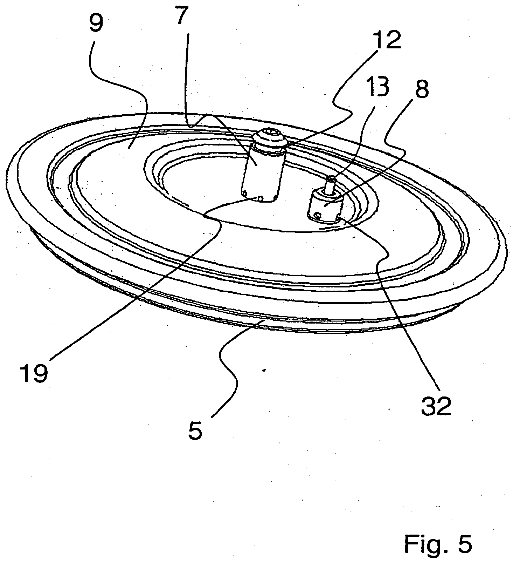

Nach Abnahme dieses Moduls bleibt, wie in der perspektivischen Ansicht gemäß Fig. 5 dargestellt, der Zargendeckel 9 übrig, welcher eine umlaufende Lippendichtung 5 umfasst. Weiter am Zargendeckel 9 angebracht ist das Ventil 7, welches eine Nut 12 zur Befestigung des Griffes 6 umfasst. In dieser Ansicht gut zu erkennen sind am Gehäuse des Ventils 7 angeordnete Kanäle, über die der Dampf entweichen kann.

Das Sicherheitsventil 8 ist ebenfalls am Zargendeckel 9 angeordnet und umfasst ebenfalls Kanäle 32, über die Druck entweichen kann.

Dieses untere Modul des Deckels kann nunmehr mit einem neuen Griff 6 (nicht dargestellt) ohne Verriegelungsmechanismus versehen werden und kann so als Deckel zum drucklosen Kochen verwendet werden.

Vorzugsweise verdeckt dieser Griff 6 sowohl das Ventil 7, als auch das Sicherheitsventil 8. Aufgrund der Verwendung des Ventils 7 als Haltestift für den Griff 6 und aufgrund dessen, dass das Sicherheitsventil 8 in unmittelbarer Nähe angeordnet ist, ist es möglich, mit einem Griff 6 beide Ventile zu verdecken. Hierdurch unterscheidet sich der Deckel optisch nicht von einem herkömmlichen Deckel zum drucklosen Kochen. Es muss kein zweiter Deckel zum drucklosen Kochen vorrätig gehalten werden.

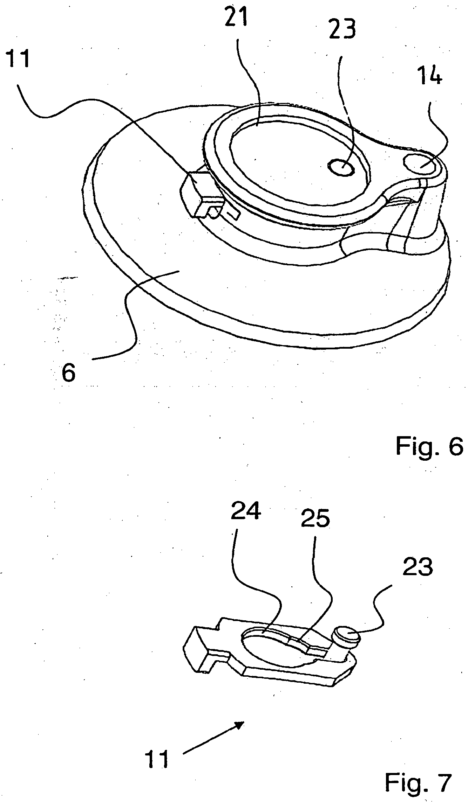

Fig. 6 zeigt eine perspektivische Ansicht des Griffes 6, welcher einen Schieber 11 zum Abnehmen des Griffes 6, zusammen mit dem Verriegelungsmechanismus (nicht dargestellt) umfasst. Der Schieber 11 ist mit einem Stift 23 im Griff 6 befestigt.

In Fig. 7 ist eine perspektivische Ansicht des Schiebers 11 dargestellt.

Der Schieber 11 umfasst eine Aussparung 24 mit größerem Durchmesser und eine in diese Aussparung 24 überschneidende weitere Aussparung 25 mit kleinerem Durchmesser. Im Grundzustand, also wenn der Schieber 11 nicht hereingedrückt wird, sitzt die Aussparung 25 mit kleinerem Durchmesser unter einem am Ventilgehäuse angeordneten Kragen und sorgt so für eine formschlüssige Verbindung.

Beim Drücken des Schiebers 11 wird dieser von seiner Ruheposition in eine Position bewegt, in welcher die Aussparung 24 mit größerem Durchmesser axial mit dem Kragen des korrespondierenden Ventils übereinstimmt. So wird die formschlüssige Verbindung freigegeben und der Griff 6 kann abgenommen werden.

Der Stift 23 verhindert, dass der Schieber 11 durch die vorgesehene Feder (nicht dargestellt) aus seinem Gehäuse, welches durch den Griff 6 gebildet wird, herausgedrückt wird.

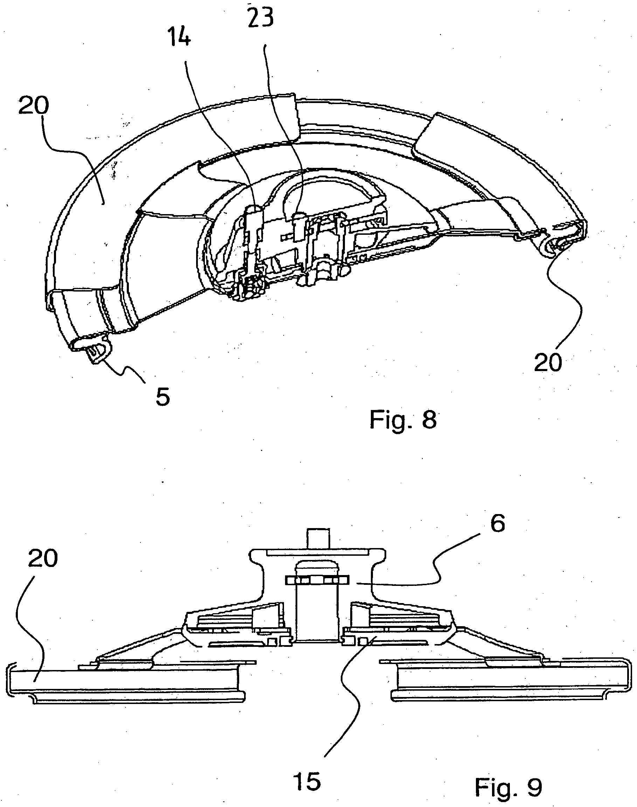

Fig. 8 zeigt eine perspektivische Ansicht eines Deckels, welcher entlang einer axial verlaufenden Ebene aufgeschnitten ist. Gut zu sehen sind die U-förmig ausgebildeten Krallen 20, die unter den Schüttrand 4 eines Topfes (nicht dargestellt) greifen können. Über die Lippendichtung 5 wird der Topf abgedichtet.

Fig. 9 zeigt eine Schnittansicht des Moduls, welches den Griff 6 und die Krallen 20 umfasst.

Zur Befestigung des Griffes 6 und der Krallen 20 ist eine Mittelplatte 15 vorgesehen, welche im zusammengebauten Zustand zwischen dem Zargendeckel 9 und dem Griff 6 liegt.

Bezug nehmend auf Fig. 10, welche eine perspektivische Ansicht der Mittelplatte 15 zeigt, sollen weitere Details erläutert werden.

Die Mittelplatte 15 umfasst eine mittige Aussparung 27, welche im zusammengebauten Zustand über das mittig auf dem Zargendeckel angeordnete Ventil (7 in Fig. 1) geschoben wird.

Weiter umfasst die Mittelplatte 15 eine weitere Aussparung 28, welche im zusammengebauten Zustand über das zweite Ventil (8 in Fig. 1) geschoben wird.

Dadurch, dass das Gehäuse des Sicherheitsventils 8 in der deaxial angeordneten Aussparung 28 sitzt, ist die Mittelplatte 15 im zusammengebauten Zustand gegenüber dem Zargendeckel axial nicht verdrehbar. Die Mittelplatte 15 umfasst ferner den Kanal 16, durch welchen im zusammengebauten Zustand Dampf zwischen Mittelplatte 15 und Zargendeckel austritt. Es versteht sich, dass der Kanal 16 randseitige Dichtungen aufweisen kann, welche in diesem Ausführungsbeispiel nicht näher dargestellt sind. Zum Anbringen einer Lippendichtung 5 kann beispielsweise randseitig eine Nut 29 eingebracht sein.

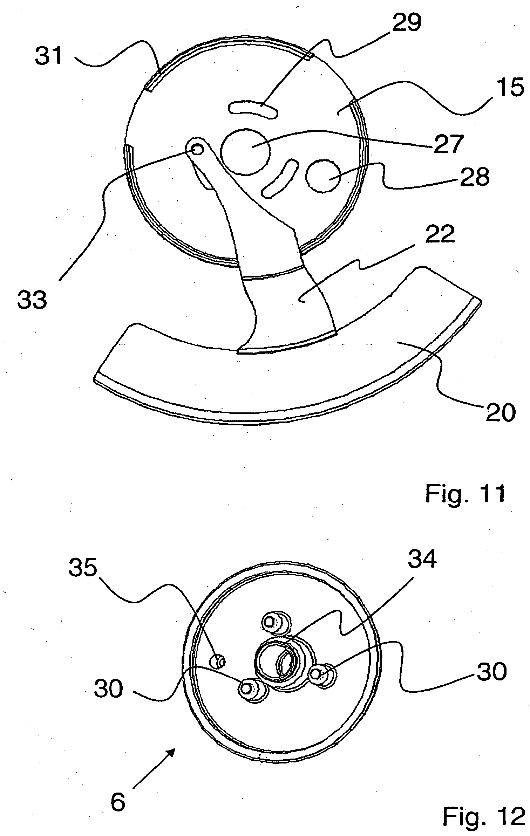

Fig. 11 zeigt weitere Details der Mittelplatte 15 und des Verriegelungsmechanismus. Die Mittelplatte 15 umfasst einen randseitigen Steg 31, welcher im Bereich der Verbindungsstege 22 zu den Krallen 20 ausgespart ist.

Wie bereits beschrieben, wird die Mittelplatte 15 im zusammengebauten Zustand aufgrund der Aussparung 28 axial fixiert.

Die Verbindungsstege 22 umfassen Aussparungen 33, welche, wie im Folgenden dargestellt wird, mit dem Griff 6 zusammenwirken.

Die Mittelplatte 15 umfasst kreissegmentförmig verlaufende Nuten 29.

Fig. 12 zeigt in einer perspektivischen Ansicht die Unterseite des Griffes 6. Der Griff 6 umfasst Stifte 30, die im zusammengebauten Zustand in die in Fig. 11 dargestellten Aussparungen 33 der Verbindungsstege 22 eingreifen. Wird nun der Deckel 2 relativ zur Mittelplatte 15 verdreht, laufen die Stifte 30 in den Nuten 29 und es können so die Krallen 20 nach außen oder innen bewegt werden.

Die Stifte 30 sind vorzugsweise pilzförmig ausgebildet und können der Befestigung von Mittelplatte 15, Verbindungsstegen 22 und Griff 6 dienen, indem diese unterhalb der Aussparungen 29 einen größeren Durchmesser aufweisen.

Auch die Aussparung 27 und ein am Griff 6 angeordneter rohrförmiger Abschnitt 34 können ein Drehgelenk bilden, welches die Mittelplatte 15 und den Griff 6 zusammenhält.

Der Deckel 2 umfasst ferner die Aussparung 35, in welche das Oberteil des Sicherheitsventils (8 in Fig. 2) eingreifen kann und so eine Drehung des Griffes 6 verhindert, wenn dieser unter Druck steht.

Durch die Erfindung wird ein Deckel für einen Schnellkochtopf 1 mit vereinfachter Handhabung bereitgestellt.

### Bezugszeichenliste

- 1: Schnellkochtopf
- 2: Deckel
- 3: Topf
- 4: Schüttrand
- 5: Lippendichtung
- 6: Griff
- 7: Ventil
- 8: Sicherheitsventil
- 9: Zargendeckel
- 10: Mutter
- 11: Schieber
- 12: Nut
- 13: Oberteil Sicherheitsventil
- 14: Stift
- 15: Mittelplatte
- 16: Kanal
- 17: Dichtungsring
- 18: Kugel
- 19: Kanal Zentralventil
- 20: Kralle
- 21: Knopf
- 22: Verbindungssteg
- 23: Stift
- 24: Aussparung
- 25: Aussparung
- 26: Kanal
- 27: Aussparung
- 28: Aussparung
- 29: Nut
- 30: Stift
- 31: Steg
- 32: Kanal
- 33: Aussparung
- 34: rohrförmiger Abschnitt
- 35: Aussparung

## Patentansprüche

1. Deckel (2) für einen Schnellkochtopf (1), umfassend einen Zargendeckel (9) mit einer Lippendichtung (5) und einem Griff (6), wobei der Deckel (2) auf einem Schnellkochtopf (1) verriegelbar ist,
**dadurch gekennzeichnet,**
**dass** der Griff (6) Mittel aufweist, um den Griff (6) zusammen mit zumindest einem Teil eines Verriegelungsmechanismus vom Zargendeckel (9) abzunehmen, wobei der Griff (6) über einen Schiebemechanismus abnehmbar ist.

2. Deckel (2) für einen Schnellkochtopf (1) nach dem vorstehenden Anspruch,
**dadurch gekennzeichnet,**
**dass** der Griff (6) an einem vorzugsweise mittig an dem Zargendeckel (9) angebrachten Ventil (7) befestigbar ist.

3. Deckel (2) für einen Schnellkochtopf (1) nach dem vorstehenden Anspruch,
**dadurch gekennzeichnet,**
**dass** das Ventil (7) im Griff (6) angeordnet ist.

4. Deckel (2) für einen Schnellkochtopf (1) nach einem der beiden vorstehenden Ansprüche,
**dadurch gekennzeichnet,**
**dass** das Ventil (7) einstellbar ist.

5. Deckel (2) für einen Schnellkochtopf (1) nach einem der vorstehenden Ansprüche,
**dadurch gekennzeichnet,**
**dass** der Verriegelungsmechanismus mittels des Griffes (6) betätigbar ist.

6. Deckel (2) für einen Schnellkochtopf (1) nach einem der vorstehenden Ansprüche,
**dadurch gekennzeichnet,**
**dass** der Deckel (2) eine Mittelplatte (15) umfasst, welche zwischen dem Griff (6) und dem Zargendeckel (9) angeordnet ist und an welcher Krallen (20) zur Verriegelung des Deckels (2) angebracht sind.

7. Deckel (2) für einen Schnellkochtopf (1) nach einem der vorstehenden Ansprüche,
**dadurch gekennzeichnet,**
**dass** der Deckel (2) ein Ventil (7) zur Festlegung des Arbeitsdrucks sowie ein Sicherheitsventil (8) umfasst, wobei eines der Ventile im Griff (6) angeordnet ist.

8. Deckel (2) für einen Schnellkochtopf(1) nach dem vorstehenden Anspruch,
**dadurch gekennzeichnet,**
**dass** eines der Ventile, vorzugsweise das Sicherheitsventil (8), am Zargendeckel (9) des Deckels (2) angeordnet ist, wobei an einem abnehmbaren Teil des Deckels (2), insbesondere am Griff (6) ein Stift (23) angebracht ist, welcher über das Ventil betätigt wird.

9. Deckel (2) für einen Schnellkochtopf (1) nach einem der vorstehenden beiden Ansprüche,
**dadurch gekennzeichnet,**
**dass** der Griff (6) an einem Gehäuse eines Ventils angebracht ist.

10. Deckel (2) für einen Schnellkochtopf (1) nach einem der vorstehenden beiden Ansprüche,
**dadurch gekennzeichnet,**
**dass** der Griff (6) an einem Gehäuse eines Ventils angebracht ist.

11. Deckel (2) für einen Schnellkochtopf (1) nach einem der vorstehenden Ansprüche,
**dadurch gekennzeichnet,**
**dass** der Deckel (2) eine Mittelplatte (15) umfasst, welche zusammen mit dem Griff (6) abnehmbar ist, wobei zwischen der Mittelplatte (15) und dem Zargendeckel (9) ein Kanal (32) angeordnet ist, durch welchen Dampf, welcher über zumindest ein Ventil ausströmt, entweichen kann.

12. Deckel (2) für einen Schnellkochtopf (1) nach einem der vorstehenden Ansprüche,
**dadurch gekennzeichnet,**
**dass** der Deckel (2) aus zwei voneinander trennbaren Module besteht, wobei das eine Modul einen Griff (6) sowie einen Verriegelungsmechanismus zum Verriegeln des Deckels (2) an dem Schüttrand eines Topfes und das andere Modul einen Zargendeckel (9) zum Abdecken des Topfes umfasst.

13. Schnellkochtopf (1), umfassend einen Deckel (2) nach einem der vorstehenden Ansprüche.

## Claims

1. Lid (2) for a pressure cooker (1), comprising a frame lid (9) having a lip seal (5) and a grip (6), wherein the lid (2) is lockable on a pressure cooker (1), **characterized in that** the grip (6) comprises means for removing the grip (6) from the frame lid (9) together with at least part of a locking mechanism, the grip (6) being removable via a sliding mechanism.

2. Lid (2) for a pressure cooker (1) according to the preceding claim, **characterized in that** the grip (6) is fixable to a valve (7) preferably attached centrically to the frame lid (9).

3. Lid (2) for a pressure cooker (1) according to the preceding claim, **characterized in that** the valve (7) is arranged within the grip (6).

4. Lid (2) for a pressure cooker (1) according to one of the two preceding claims, **characterized in that** the valve (7) is adjustable.

5. Lid (2) for a pressure cooker (1) according to one of the preceding claims, **characterized in that** the locking mechanism can be actuated by means of the grip (6).

6. Lid (2) for a pressure cooker (1) according to one of the preceding claims, **characterized in that** the lid (2) comprises a central plate (15) which is arranged between the grip (6) and the frame lid (9) and to which claws (20) for locking the lid (2) are attached.

7. Lid (2) for a pressure cooker (1) according to one of the preceding claims, **characterized in that** the lid (2) comprises a valve (7) for determining the operating pressure, and a safety valve (8), one of the valves being arranged within the grip (6).

8. Lid (2) for a pressure cooker (1) according to the preceding claim, **characterized in that** one of the valves, preferably the safety valve (8), is arranged at the frame lid (9) of the lid (2), wherein a pin (23) is attached to a removable part of the lid (2), in particular to the grip (6), the pin (23) being actuated by means of the valve.

9. Lid (2) for a pressure cooker (1) according to one of the preceding claims, **characterized in that** the grip (6) is attached to a body of a valve.

10. Lid (2) for a pressure cooker (1) according to one of the preceding claims, **characterized in that** the grip (6) is attached to a body of a valve.

11. Lid (2) for a pressure cooker (1) according to one of the preceding claims, **characterized in that** the lid (2) comprises a central plate (15) which is removable together with the grip (6), wherein a passage is arranged between the central plate (15) and the frame lid (9) through which passage steam that flows out of at least one valve may escape.

12. Lid (2) for a pressure cooker (1) according to one of the preceding claims, **characterized in that** the lid (2) consists of two separable modules, the one module comprising a grip (6) as well as a locking mechanism for locking the lid (2) at the pouring edge of a cooker, and the other module comprising a frame lid (9) for covering the cooker.

13. Pressure cooker (1), comprising a lid (2) according to one of the preceding claims.

## Revendications

1. Couvercle (2) pour autocuiseur (1), comprenant un couvercle à collerette (9) doté d'un joint à lèvre (5) et d'une poignée (6), le couvercle (2) pouvant être verrouillé sur un autocuiseur (1),
**caractérisé en ce que**
la poignée (6) comporte des moyens pour enlever la poignée (6) du couvercle à collerette (9) conjointement avec au moins une partie d'un mécanisme de verrouillage, la poignée (6) pouvant être enlevée par le biais d'un mécanisme coulissant.

2. Couvercle (2) pour autocuiseur (1) selon la revendication précédente,
**caractérisé en ce que**
la poignée (6) peut être fixée à une soupape (7) montée de préférence au centre du couvercle à collerette (9).

3. Couvercle (2) pour autocuiseur (1) selon la revendication précédente,
**caractérisé en ce que**
la soupape (7) est disposée dans la poignée (6).

4. Couvercle (2) pour autocuiseur (1) selon l'une des deux revendications précédentes,
**caractérisé en ce que**
la soupape (7) est réglable.

5. Couvercle (2) pour autocuiseur (1) selon l'une des revendications précédentes,
**caractérisé en ce que**
le mécanisme de verrouillage peut être actionné au moyen de la poignée (6).

6. Couvercle (2) pour autocuiseur (1) selon l'une des revendications précédentes,
**caractérisé en ce que**
le couvercle (2) comprend une plaque centrale (15), qui est disposée entre la poignée (6) et le couvercle à collerette (9) et sur laquelle se trouvent des griffes (20) pour verrouiller le couvercle (2).

7. Couvercle (2) pour autocuiseur (1) selon l'une des revendications précédentes,
**caractérisé en ce que**
le couvercle (2) comprend une soupape (7) destinée à définir la pression de travail ainsi qu'une soupape de sûreté (8), l'une des soupapes étant disposée dans la poignée (6).

8. Couvercle (2) pour autocuiseur (1) selon la revendication précédente,
**caractérisé en ce que**
l'une des soupapes, de préférence la soupape de sûreté (8), est disposée sur le couvercle à collerette (9) du couvercle (2), une tige étant montée sur une partie amovible du couvercle (2), en particulier sur la poignée (6), la tige étant actionnée par le biais de la soupape.

9. Couvercle (2) pour autocuiseur (1) selon l'une des deux revendications précédentes,
**caractérisé en ce que**
la poignée (6) est montée sur un boîtier d'une soupape.

10. Couvercle (2) pour autocuiseur (1) selon l'une des deux revendications précédentes,
**caractérisé en ce que**
la poignée (6) est montée sur un boîtier d'une soupape.

11. Couvercle (2) pour autocuiseur (1) selon l'une des revendications précédentes,
**caractérisé en ce que**
le couvercle (2) comprend une plaque centrale (15), qui peut être enlevée conjointement avec la poignée (6), un canal (32) étant disposé entre la plaque centrale (15) et le couvercle à collerette (9), à travers lequel de la vapeur, qui s'échappe par le biais d'au moins une soupape, peut se dégager.

12. Couvercle (2) pour autocuiseur (1) selon l'une des revendications précédentes,
**caractérisé en ce que**
le couvercle (2) se compose de deux modules séparables l'un de l'autre, un des modules comprenant une poignée (6) ainsi qu'un mécanisme de verrouillage pour verrouiller le couvercle (2) sur le bord verseur d'une casserole et l'autre module comprenant un couvercle à collerette (9) pour recouvrir la casserole.

13. Autocuiseur (1), comprenant un couvercle (2) selon l'une des revendications précédentes.
